(19) **Europäisches Patentamt / European Patent Office / Office européen des brevets**

(11) **EP 3 783 388 A1**

(12) **EUROPEAN PATENT APPLICATION**
published in accordance with Art. 153(4) EPC

(43) Date of publication:
**24.02.2021 Bulletin 2021/08**

(51) Int Cl.:
***G01S 11/06*** (2006.01)

(21) Application number: **19787718.6**

(22) Date of filing: **18.04.2019**

(86) International application number:
**PCT/CN2019/083262**

(87) International publication number:
**WO 2019/201305 (24.10.2019 Gazette 2019/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.04.2018 CN 201810362539**

(71) Applicant: **BYD Company Limited**
**Guangdong 518118 (CN)**

(72) Inventors:
• **WANG, Wei**
**Shenzhen, Guangdong 518118 (CN)**
• **PAN, Chengpiao**
**Shenzhen, Guangdong 518118 (CN)**
• **WU, Lihua**
**Shenzhen, Guangdong 518118 (CN)**

(74) Representative: **Ziebig & Hengelhaupt Patent- und Rechtsanwaltskanzlei PartG mbB**
**Leipziger Straße 49**
**10117 Berlin (DE)**

(54) **VEHICLE, AND UNLOCKING METHOD AND UNLOCKING APPARATUS THEREFOR**

(57) The present disclosure discloses a vehicle and a method and an apparatus for unlocking a vehicle. The vehicle includes a plurality of Bluetooth modules, and the method includes the following steps: respectively obtaining a received signal strength indicator value corresponding to each of the Bluetooth modules; obtaining a distance between a terminal and the vehicle and a position of the terminal according to each of the received signal strength indicator values; determining, according to the distance between the terminal and the vehicle and the position of the terminal, whether the terminal is in a safe unlocking area and whether the vehicle meets a safe unlocking condition; and if it is determined that the terminal is in the safe unlocking area and the vehicle meets the safe unlocking condition, sending a vehicle unlocking instruction to a body control module of the vehicle, so that the body control module controls, according to the vehicle unlocking instruction, the vehicle to be unlocked. Therefore, according to the method, it can be accurately determined whether the terminal is in the safe unlocking area according to the received signal strength indicator values of the plurality of Bluetooth modules, greatly increasing accuracy and safety of vehicle unlocking.

When an unlocking instruction sent by a user is received, respectively obtain a received signal strength indicator value corresponding to each Bluetooth module — S1

Obtain a distance between a terminal and a vehicle and a position of the terminal according to each of the received signal strength indicator values — S2

Determine, according to the distance between the terminal and the vehicle, whether the terminal is in a safe unlocking area and whether the vehicle meets a safe unlocking condition — S3

If it is determined that the terminal is in the safe unlocking area and the vehicle meets the safe unlocking condition, send a vehicle unlocking instruction to a body control module of the vehicle, so that the body control module controls, according to the vehicle unlocking instruction, the vehicle to be unlocked — S4

FIG. 1

**Description**

## CROSS-REFERENCE TO RELATED APPLICATIONS

1.The present disclosure is provided based on and claims priority to Chinese patent application No. 201810362539.X filed on April 20, 2018. The entire content of the above-referenced application is incorporated herein by reference.

## FIELD

2.The present disclosure relates to the technical field of automobiles, and in particular, to a vehicle and a method and an apparatus for unlocking a vehicle.

## BACKGROUND

3.Currently, unlocking a vehicle by using a Bluetooth technology is generally as follows: a Bluetooth module is disposed at a specific position of the vehicle, and a distance between a terminal and the Bluetooth module is determined according to a change of signal strength of the Bluetooth module, and then it is determined whether the terminal is in a safe unlocking area according to the distance between the terminal and the Bluetooth module.

4.However, the signal strength of the Bluetooth module is greatly affected by the distance. For example, the safe unlocking distance of the vehicle is 3 meters. If the Bluetooth module is mounted at a tail of the vehicle, and a user is 1 meter in front of the vehicle, a current detected distance between the terminal and the Bluetooth module is 4 meters, and it is determined that the terminal is not in the safe unlocking area, and therefore the user cannot unlock the vehicle through the terminal. If the user is 1 meter behind the vehicle, a current detected distance between the terminal and the Bluetooth module is 1 meter, and it is determined that the terminal is in the safe unlocking area, and therefore the user can unlock the vehicle through the terminal.

5.In the above two cases, the distances between the user and the vehicle are both 1 meter, but in one of the cases, the vehicle cannot be unlocked through the terminal. Therefore, the above method cannot accurately determine positions of the terminal and the vehicle, and as a result, it cannot be accurately determined whether the terminal is in the safe unlocking area.

## SUMMARY

6.The present disclosure is intended to resolve at least one of the technical problems in the related art to some extent. To this end, a first purpose of the present disclosure is intended to provide a method for unlocking a vehicle. According to the method, it can be accurately determined whether a terminal is in a safe unlocking area according to a received signal strength indicator value of a Bluetooth module, greatly increasing accuracy and safety of vehicle unlocking.

7.A second purpose of the present disclosure is intended to provide an apparatus for unlocking a vehicle.

8.A third purpose of the present disclosure is intended to provide a vehicle.

9.In order to achieve the above purposes, an embodiment of a first aspect of the present disclosure provides a method for unlocking a vehicle. The vehicle includes a plurality of Bluetooth modules configured to establish a communication connection to a terminal, and the method includes the following steps: when an unlocking instruction sent by a user is received, respectively obtaining a received signal strength indicator value corresponding to each of the Bluetooth modules; obtaining a distance between the terminal and the vehicle and a position of the terminal according to each of the received signal strength indicator values; determining, according to the distance between the terminal and the vehicle and the position of the terminal, whether the terminal is in a safe unlocking area and whether the vehicle meets a safe unlocking condition; and if it is determined that the terminal is in the safe unlocking area and the vehicle meets the safe unlocking condition, sending a vehicle unlocking instruction to a body control module of the vehicle, so that the body control module controls, according to the vehicle unlocking instruction, the vehicle to be unlocked.

10.According to the method for unlocking a vehicle in the embodiment of the present disclosure, when the unlocking instruction sent by the user is received, the received signal strength indicator value corresponding to each of the Bluetooth modules is respectively obtained, and the distance between the terminal and the vehicle and the position of the terminal are obtained according to each of the received signal strength indicator values, and then it is determined according to the distance between the terminal and the vehicle and the position of the terminal whether the terminal is in the safe unlocking area, and it is determined whether the vehicle meets the safe unlocking condition. If it is determined that the terminal is in the safe unlocking area and the vehicle meets the safe unlocking condition, the vehicle unlocking instruction is sent to the body control module of the vehicle, so that the body control module controls, according to the vehicle unlocking instruction, the vehicle to be unlocked. Therefore, according to the method, it can be accurately determined whether the terminal is in the safe unlocking area according to the received signal strength indicator values of the plurality of Bluetooth modules, greatly increasing accuracy and safety of vehicle unlocking.

11.In addition, the method for unlocking a vehicle according to the above embodiment of the present disclosure may further have the following additional technical features.

12.According to an embodiment of the present disclosure, the obtaining a distance between the terminal and the vehicle according to the received signal strength indicator value includes: filtering each of the received signal strength indicator values, and calculating an average value of the received signal strength indicator values within a preset time; obtaining an absolute value of the average value of the received signal strength indicator values; and obtaining a distance between the terminal and the Bluetooth module according to the absolute value, and obtaining the distance between the terminal and the vehicle according to the distance between the terminal and the Bluetooth module.

13.According to an embodiment of the present disclosure, the obtaining a position of the terminal according to each of the received signal strength indicator values includes: obtaining a distance between the terminal and each of the Bluetooth modules according to each of the received signal strength indicator values; and obtaining the position of the terminal by using a three-point positioning principle according to the distance between the terminal and each of the Bluetooth modules.

14.According to an embodiment of the present disclosure, the distance between the terminal and the Bluetooth module is obtained according to the following equation: $D=10^{[(|RSSI|-A)/(10n)]}$, where D is the distance between the terminal and the Bluetooth module, |RSSI| is the absolute value, A is a received signal strength indicator value existing when the terminal is 1 meter away from the Bluetooth module, and n is an attenuation factor of the Bluetooth module.

15.According to an embodiment of the present disclosure, the method for unlocking a vehicle further includes: determining whether the terminal is in the vehicle according to the position of the terminal; and if it is determined that the terminal is in the vehicle, prohibiting, by the body control module, the vehicle from being controlled to be unlocked/locked.

16.According to an embodiment of the present disclosure, the determining whether the terminal is in a safe unlocking area according to the distance between the terminal and the vehicle and the position of the terminal includes:

determining whether the distance between the terminal and the vehicle is less than or equal to a safe unlocking distance and determining whether the terminal is in the vehicle; and if the distance between the terminal and the vehicle is less than or equal to the safe unlocking distance and the terminal is not in the vehicle, determining that the terminal is in the safe unlocking area.

17.In order to achieve the above purposes, an embodiment of a second aspect of the present disclosure provides an apparatus for unlocking a vehicle, including: a plurality of Bluetooth modules configured to establish a communication connection to a terminal; a first obtaining module configured to: when an unlocking instruction sent by a user is received, respectively obtain a received signal strength indicator value corresponding to each of the Bluetooth modules; a second obtaining module configured to obtain a distance between the terminal and the vehicle and a position of the terminal according to each of the received signal strength indicator values; a determining module configured to determine whether the terminal is in a safe unlocking area according to the distance between the terminal and the vehicle, and determine according to the position of the terminal, whether the vehicle meets a safe unlocking condition; and an instruction sending module configured to: when it is determined that the terminal is in the safe unlocking area and the vehicle meets the safe unlocking condition, send a vehicle unlocking instruction to a body control module of the vehicle, so that the body control module controls, according to the vehicle unlocking instruction, the vehicle to be unlocked.

18.According to the apparatus for unlocking a vehicle in the embodiment of the present disclosure, the plurality of Bluetooth modules establish a communication connection to the terminal, when the unlocking instruction sent by the user is received, the first obtaining module respectively obtains the received signal strength indicator value corresponding to each of the Bluetooth modules is respectively obtained, the second obtaining module obtains the distance between the terminal and the vehicle and the position of the terminal according to each of the received signal strength indicator values, and the determining module determines, according to the distance between the terminal and the vehicle and the position of the terminal, whether the terminal is in the safe unlocking area and whether the vehicle meets the safe unlocking condition. When it is determined that the terminal is in the safe unlocking area and the vehicle meets the safe unlocking condition, the instruction sending module sends the vehicle unlocking instruction to the body control module of the vehicle, so that the body control module controls, according to the vehicle unlocking instruction, the vehicle to be unlocked. Therefore, according to the apparatus, it can be accurately determined whether the terminal is in the safe unlocking area according to the received signal strength indicator values of the plurality of Bluetooth modules, greatly increasing accuracy and safety of vehicle unlocking.

19.In addition, the apparatus for unlocking a vehicle according to the above embodiment of the present disclosure may further have the following additional technical features.

20.According to an embodiment of the present disclosure, the plurality of Bluetooth modules include first to third Bluetooth modules respectively disposed at a left door, a right door, and a trunk of the vehicle.

21.According to an embodiment of the present disclosure, the second obtaining module is further configured to: filter each of the received signal strength indicator values, and calculate an average value of the received signal strength indicator values within a preset time; obtain an absolute value of the average value of the received signal strength indicator values; and obtain a distance between the terminal and the Bluetooth module according to the absolute value, and obtain the distance between the terminal and the vehicle according to the distance between the terminal and the Bluetooth module.

22.According to an embodiment of the present disclosure, the second obtaining module is further configured to: obtain a distance between the terminal and each of the Bluetooth modules according to each of the received signal strength indicator values; and obtain the position of the terminal by using a three-point positioning principle according to the distance between the terminal and each of the Bluetooth modules.

23.According to an embodiment of the present disclosure, the second obtaining module obtains the distance between the terminal and the Bluetooth module according to the following equation: $D=10^{[(|RSSI|-A)/(10n)]}$, where D is the distance between the terminal and the Bluetooth module, I RSSI I is the absolute value, A is a received signal strength indicator value existing when the terminal is 1 meter away from the Bluetooth module, and n is an attenuation factor of the Bluetooth module.

24.According to an embodiment of the present disclosure, the determining module may be further configured to determine whether the terminal is in the vehicle according to the position of the terminal, where if it is determined that the terminal is in the vehicle, the body control module prohibits the vehicle from being unlocked/locked.

25.According to an embodiment of the present disclosure, the determining module is further configured to: determine whether the distance between the terminal and the vehicle is less than or equal to a safe unlocking distance and determine whether the terminal is in the vehicle, and if the distance between the terminal and the vehicle is less than or equal to the safe unlocking distance and the terminal is not in the vehicle, determine that the terminal is in the safe unlocking area.

26.In order to achieve the above purposes, an embodiment of a third aspect of the present disclosure provides a vehicle, including the apparatus for unlocking a vehicle according to the embodiment of the second aspect of the present disclosure.

27.According to the vehicle of the embodiment of the present disclosure, by using the above apparatus for unlocking a vehicle, it can be accurately determined whether a terminal is in a safe unlocking area according to received signal strength indicator values of a plurality of Bluetooth modules, greatly increasing accuracy and safety of vehicle unlocking.

## BRIEF DESCRIPTION OF THE DRAWINGS

28.The foregoing and/or additional aspects and advantages of the present disclosure will become apparent and comprehensible in the description made with reference to the following accompanying drawings, where:

29.FIG. 1 is a flowchart of a method for unlocking a vehicle according to an embodiment of the present disclosure;

30.FIG. 2 is a schematic diagram of a position for disposing a Bluetooth module according to an embodiment of the present disclosure;

31.FIG. 3 is a flowchart of a method for unlocking a vehicle according to another embodiment of the present disclosure;

32.FIG. 4 is a flowchart of a method for unlocking a vehicle according to still another embodiment of the present disclosure;

33.FIG. 5 is a schematic block diagram of an apparatus for unlocking a vehicle according to an embodiment of the present disclosure; and

34.FIG. 6 is a schematic block diagram of a vehicle according to an embodiment of the present disclosure.

## DETAILED DESCRIPTION

35.The following describes embodiments of the present disclosure in detail. Examples of the embodiments are shown in the accompanying drawings, and same or similar reference signs in all the accompanying drawings indicate same or similar components or components having same or similar functions. The embodiments described below with reference to the accompanying drawings are exemplary, and are intended to explain the present disclosure and cannot be construed as a limitation to the present disclosure.

36.A method and an apparatus for unlocking a vehicle and a vehicle according to the embodiments of the present disclosure are described below with reference to the drawings.

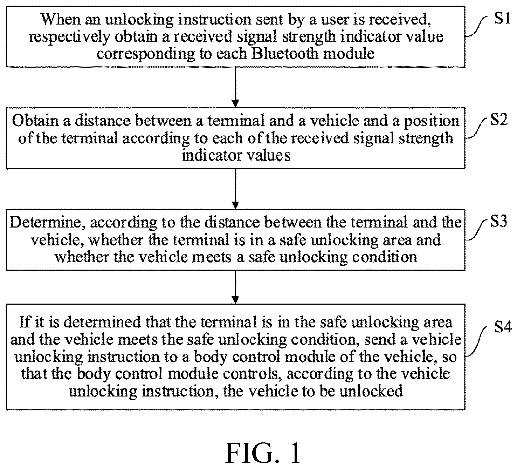

37.FIG. 1 is a flowchart of a method for unlocking a vehicle according to an embodiment of the present disclosure. The vehicle includes a plurality of Bluetooth modules configured to establish a communication connection to a terminal. As shown in FIG. 1, the method for unlocking a vehicle includes the following steps.

38.S1: When an unlocking instruction sent by a user is received, respectively obtain a received signal strength indicator value corresponding to each of the Bluetooth modules.

39.S2: Obtain a distance between the terminal and the vehicle and a position of the terminal according to each of the received signal strength indicator values.

40.S3: Determine, according to the distance between the terminal and the vehicle, whether the terminal is in a safe unlocking area and whether the vehicle meets a safe unlocking condition.

41.In an embodiment of the present disclosure, the determining whether the terminal is in a safe unlocking area according to the distance between the terminal and the vehicle and the position of the terminal may include: determining whether the distance between the terminal and the vehicle is less than or equal to a safe unlocking distance and determining whether the terminal is in the vehicle; and if the distance between the terminal and the vehicle is less than or equal safe unlocking distance and the terminal is not in vehicle, determining that the terminal is in the safe unlocking area.

42.The safe unlocking distance may be preset according to an actual situation, for example, may be 3 meters.

43.S4: If it is determined that the terminal is in the safe unlocking area and the vehicle meets the safe unlocking condition, send a vehicle unlocking instruction to a body control module of the vehicle, so that the body control module controls, according to the vehicle unlocking instruction, the vehicle to be unlocked.

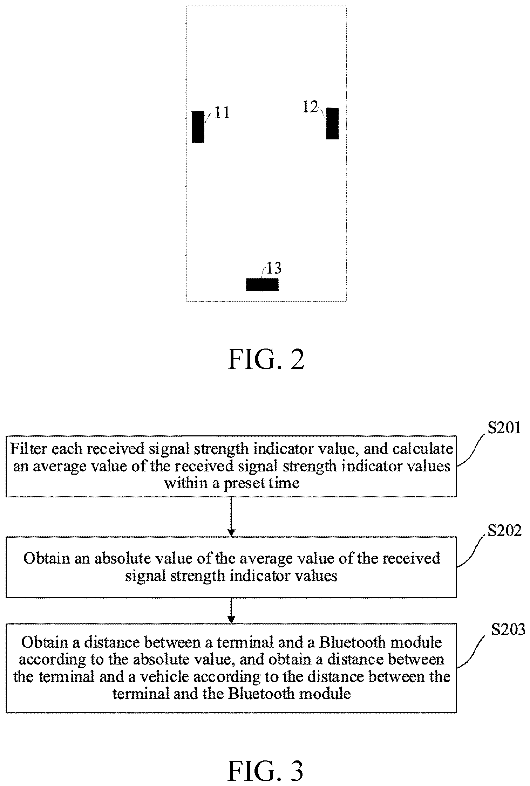

44.In the embodiment of the present disclosure, as shown in FIG. 2 the plurality of Bluetooth modules may include first to third Bluetooth modules 11 to 13 that may be respectively disposed a left door, a right door, and a trunk of the vehicle. Certainly, a number of Bluetooth modules may also be other values, for example, 4. The four Bluetooth modules may be respectively disposed at the left door, a right door, a trunk, and a front hood. No specific limitation is imposed herein.

45.A microswitch may be disposed on a door handle of the vehicle. When the user wants to unlock the vehicle, the user may touch the microswitch to send an unlocking instruction. The Bluetooth module may establish a communication connection to the terminal to unlock the vehicle through a Bluetooth technology. The terminal may be a mobile terminal or a wearable device, etc. The mobile terminal may be a hardware device with various operating systems, such as a mobile phone, a tablet computer, or a personal digital assistant, etc. The wearable device may be a smart watch or smart eyes, etc. Since a received signal strength indicator (RSSI) of the Bluetooth module is greatly affected by a distance, generally, a closer distance between the Bluetooth module and the terminal brings a smaller absolute value of the received signal strength indicator value. Therefore, the distance between the terminal and the vehicle can be obtained according to the received signal strength indicator value. Therefore, when the unlocking instruction sent by the user is received, the received signal strength indicator value corresponding to each of the Bluetooth modules can be respectively obtained, and then the distance between the terminal and the vehicle and the position of the terminal can be obtained according to each of the received signal strength indicator values, and a distance between each of the Bluetooth modules and the terminal may be obtained according to the received signal strength indicator value corresponding to each of the Bluetooth modules, and a smallest distance is used as the distance between the terminal and the vehicle. Alternatively, a smallest absolute value of the received signal strength indicator values may be obtained according to the received signal strength indicator values, and then a distance between a corresponding Bluetooth module and the terminal is obtained according to the smallest value, and the distance is used as the distance between the terminal and the vehicle. Then it is determined whether the distance between the terminal and the vehicle is less than or equal to a preset safe unlocking distance, and it is determined whether the terminal is in the vehicle according to the position of the terminal. The preset safe unlocking distance may be preset according to an actual situation, for example, may be 3 meters. If the distance between the terminal and the vehicle is less than or equal to 3 meters, and the terminal is not in the vehicle, it is determined that the terminal is in the safe unlocking area. Then it is determined whether the vehicle meets the safe unlocking condition. The safe unlocking condition may include that the vehicle is in the anti-theft state, or the Bluetooth is in a logged-in state, etc. The logged-in state means that the terminal is connected to the Bluetooth of the vehicle and is authenticated. If the terminal is in the safe unlocking area and the vehicle meets the safe unlocking condition, a vehicle unlocking instruction is sent to a body control module (BCM) of the vehicle. After receiving the vehicle unlocking instruction, the body control module may verify an identity of the terminal according to an established Bluetooth channel. If the verification succeeds, the body control module may send a corresponding controller area network (CAN) message to a door lock actuator of the vehicle, so that the door lock actuator executes the unlocking command according to the CAN message to unlock the vehicle. If the distance between the terminal and the vehicle is greater than 3 meters, it indicates that the terminal is far away from the vehicle. Although currently the terminal can be connected to the Bluetooth, the terminal is beyond the safe unlocking distance, and therefore unlocking is not allowed. Alternatively, if the terminal is located in the vehicle, the vehicle cannot be unlocked even if the user sends an unlocking instruction through the microswitch on the door, so as to prevent the vehicle from being unlocked by others at will when the user stops the vehicle to wait for someone or have a rest in the vehicle, thereby improving the safety of vehicle unlocking. Therefore, according to the method, it can be accurately determined whether the terminal is in the safe unlocking area according to the received signal strength indicator values of the plurality of Bluetooth modules, greatly increasing accuracy and safety of vehicle unlocking.

46.Certainly, when the user wants to lock the vehicle, the user may also send a locking instruction by touching the microswitch. If the terminal is in a safe locking range (the distance between the terminal and the vehicle is less than or equal to 3 meters, and the terminal is not in the vehicle), and the vehicle meets the safe unlocking condition, after receiving the vehicle unlocking instruction, the body control module may verify the identity of the terminal according to the established Bluetooth channel. If the verification succeeds, the body control module may send a corresponding CAN message to the door lock actuator of the vehicle, so that the door lock actuator executes the unlocking command according to the CAN message to unlock the vehicle. The safe unlocking condition may include that the vehicle is at an OFF position and is not in an anti-theft state.

47.According to an embodiment of the present disclosure, as shown in FIG. 3, the obtaining a distance between the terminal and the vehicle according to each of the received signal strength indicator (RSSI) values may include:

48.S201: Filter each of the received signal strength indicator values, and calculate an average value of the received signal strength indicator values within a preset time.

49.S202: Obtain an absolute value of the average value of the received signal strength indicator values.

50.S203: Obtain a distance between the terminal and the Bluetooth module according to the absolute value, and obtain the distance between the terminal and the vehicle according to the distance between the terminal and the Bluetooth module.

51.In the embodiment of the present disclosure, the distance between the terminal and the Bluetooth module is obtained according to the following equation:

$$D=10^\wedge[(|RSSI|-A)/(10n)].$$

52.D is the distance between the terminal and the Bluetooth module, |RSSI| is the absolute value of the average value of the received signal strength indicator values, A is a received signal strength indicator value existing when the terminal is 1 meter away from the Bluetooth module, and n is an attenuation factor of the Bluetooth module. A value of n is affected by a body and a partition and a partition apparatus in the vehicle, and values of n of the Bluetooth modules are also different. A and n may be preset through related experiments.

53.After the received signal strength indicator value corresponding to each of the Bluetooth modules is obtained, filtering and smoothing are performed on each of the values to eliminate influence of noise, and the average value of the received signal strength indicator values within the preset time is calculated. The absolute value of the average value of the received signal strength indicator values is obtained, and the distance between the terminal and the Bluetooth module is obtained according to the absolute value. For example, if average values of received signal strength indicator values of three Bluetooth modules are respectively - 72, -65, and -83, and absolute values are respectively 72, 65, and 83, a smallest value of the absolute values is obtained, a distance between the Bluetooth module and the terminal corresponding to each of the absolute values is calculated according to the formula D=10^[(|RSSI|-A)/(10n)], and the distance is used as the distance between the terminal and the vehicle. Alternatively, the distance between each of the Bluetooth modules and the terminal may be directly calculated according to the formula D=10^[(|RSSI|-A)/(10n)] respectively, and then a smallest calculated distance is used as the distance between the terminal and the vehicle. In this way, the distance between the terminal and the vehicle can be accurately calculated, and then it can be accurately determined whether the terminal is in the safe unlocking area.

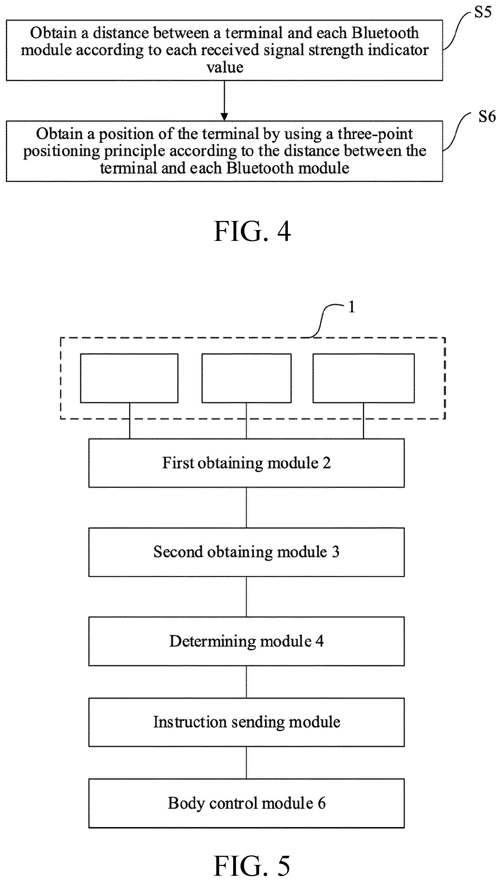

54.According to an embodiment of the present disclosure, as shown in FIG. 4, the obtaining a position of the terminal according to each of the received signal strength indicator values may include:

55.S5: Obtain a distance between the terminal and each of the Bluetooth modules according to each of the received signal strength indicator values.

56.S6: Obtain the position of the terminal by using a three-point positioning principle according to the distance between the terminal and each of the Bluetooth modules.

57.After the received signal strength indicator value corresponding to each of the Bluetooth modules is obtained, the distance between each of the Bluetooth modules and the terminal may be calculated according to the formula D=10^[(|RSSI|-A)/(10n)]. An actual position of each of the Bluetooth modules is used as a center to draw three circles by using the distance between the Bluetooth module and the terminal as a radius. The three circles with different centers and radii intersect at a specific point, and the point is the position of the terminal.

58.According to an embodiment of the present disclosure, the method for unlocking a vehicle may further include: determining whether the terminal is in the vehicle according to position of the terminal. If it is determined that the terminal is in the vehicle, the body control module prohibits the vehicle from being unlocked/locked.

59.After the position of the terminal is determined, it is determined whether the terminal is in the vehicle. If the terminal is in the vehicle, the body control module sends, to the door lock actuator of the vehicle, a corresponding CAN message prohibiting the unlocking/locking of the vehicle, to prohibit the vehicle from being unlocked/locked. In other words, if the terminal is in the vehicle, even if the user mistakenly triggers the terminal to send an unlocking/locking instruction, the vehicle is not unlocked/locked.

60.In summary, according to the method for unlocking a vehicle in the embodiment of the present disclosure, when the unlocking instruction sent by the user is received, the received signal strength indicator value corresponding to each of the Bluetooth modules is respectively obtained, and the distance between the terminal and the vehicle and the position of the terminal are obtained according to each of the received signal strength indicator values, and then it is determined according to the distance between the terminal and the vehicle and the position of the terminal whether the terminal is in the safe unlocking area and whether the vehicle meets the safe unlocking condition. If it is determined that the terminal is in the safe unlocking area and the vehicle meets the safe unlocking condition, the vehicle unlocking instruction is sent to the body control module of the vehicle, so that the body control module controls, according to the vehicle unlocking instruction, the vehicle to be unlocked. Therefore, according to the method, it can be accurately determined whether the terminal is in the safe unlocking area according to the received signal strength indicator values of the plurality of Bluetooth modules, greatly increasing the safety of vehicle unlocking.

61.FIG. 5 is a schematic block diagram of an apparatus for unlocking a vehicle according to an embodiment of the present disclosure. As shown in FIG. 5, the apparatus includes: a plurality of Bluetooth modules 1 (three Bluetooth modules are used as an example in FIG. 5), a first obtaining module 2, a second obtaining module 3, a determining module 4, and an instruction sending module 5.

62.The plurality of Bluetooth modules 1 are configured to establish a communication connection to a terminal. The first obtaining module 2 is configured to: when an unlocking instruction sent by a user is received, respectively obtain a received strength indicator value corresponding to each of the Bluetooth modules 1. The second obtaining module 3 is configured to obtain a distance between the terminal and the vehicle and a position of the terminal according to each of the received signal strength indicator values. The determining module 4 is configured to determine, according to the distance between the terminal and the vehicle and the position of the terminal, whether the terminal is in a safe unlocking area and whether the vehicle meets a safe unlocking condition. The instruction sending module 5 is configured to: when the terminal is in the safe unlocking area and the vehicle meets the safe unlocking condition, send a vehicle unlocking instruction to a body control module 6 of the vehicle, so that the body control module 6 controls, according to the vehicle unlocking instruction, the vehicle to be unlocked.

63.According to an embodiment of the present disclosure, as shown in FIG. 2 the plurality of Bluetooth modules 1 may include first to third Bluetooth modules 11 to 13 that may be respectively disposed a left door, a right door, and a trunk of the vehicle. Certainly, a number of Bluetooth modules 1 may also be other values, for example, 4. The four Bluetooth modules may be respectively disposed at the left door, a right door, a trunk, and a front hood. No specific limitation is imposed herein.

64.The determining module 3 may be further configured to: determine whether the distance between the terminal and the vehicle is less than or equal to a safe unlocking distance and determine whether the terminal is in the vehicle, and if the distance between the terminal and the vehicle is less than or equal to the safe unlocking distance and the terminal is not in vehicle, determine that the terminal is in the safe unlocking area. The safe unlocking distance may be preset according to an actual situation, for example, may be 3 meters.

65.A microswitch may be disposed on a door handle of the vehicle. When the user wants to unlock the vehicle, the user may touch the microswitch to send an unlocking instruction. The Bluetooth module 1 may establish a communication connection to the terminal to unlock the vehicle through a Bluetooth technology. The terminal may be a mobile terminal or a wearable device, etc. The mobile terminal may be a hardware device with various operating systems, such as a mobile phone, a tablet computer, or a personal digital assistant, etc. The wearable device may be a smart watch or smart eyes, etc. Since an RSSI of the Bluetooth module 1 is greatly affected by a distance, generally, a closer distance between the Bluetooth module 1 and the terminal brings a smaller absolute value of the received signal strength indicator value. Therefore, the distance between the terminal and the vehicle can be obtained according to the received signal strength indicator value. Therefore, when the unlocking instruction sent by the user is received, the first obtaining module 2 may respectively obtain the received signal strength indicator value corresponding to each of the Bluetooth modules 1, and then the second obtaining module 3 obtains the distance between the terminal and the vehicle and the position of the terminal according to each of the received signal strength indicator values, and may obtain the distance between each of the Bluetooth modules 1 and the terminal according to the received signal strength indicator value corresponding to each of the Bluetooth modules, and use a smallest distance as the distance between the terminal and the vehicle. Alternatively, the second obtaining module 3 may obtain a smallest absolute value of the received signal strength indicator values according to the received signal strength indicator values, and then obtain a distance between a corresponding Bluetooth module 1 and the terminal according to the smallest value, and use the distance as the distance between the terminal and the vehicle. Then the determining module 4 determines whether the distance between the terminal and the vehicle is less than or equal to a preset safe unlocking distance, and determines whether the terminal is in the vehicle according to the position of the terminal. The preset safe unlocking distance may be preset according to an actual situation, for example, may be 3 meters. If the distance between the terminal and the vehicle is less than or equal to 3 meters, and the terminal is not in the vehicle, the determining module 4 determines that the terminal is in the safe unlocking area. Then it is determined whether the vehicle meets the safe unlocking condition. The safe unlocking condition may include that the vehicle is in the anti-theft state, or the Bluetooth is in a logged-in state, etc. The logged-in state means that the terminal is connected to the Bluetooth of the vehicle and is authenticated. If the terminal is in the safe unlocking area and the vehicle meets the safe unlocking condition, the instruction sending module 5 sends a vehicle unlocking instruction to a body control module 6 of the vehicle.

After receiving the vehicle unlocking instruction, the body control module 6 may verify an identity of the terminal according to an established Bluetooth channel. If the verification succeeds, the body control module 6 may send a corresponding CAN message to a door lock actuator of the vehicle, so that the door lock actuator executes the unlocking command according to the CAN message to unlock the vehicle. If the distance between the terminal and the vehicle is greater than 3 meters, it indicates that the terminal is far away from the vehicle. Although currently the terminal can be connected to the Bluetooth, the terminal is beyond the safe unlocking distance, and therefore unlocking is not allowed. Alternatively, if the terminal is located in the vehicle, the vehicle cannot be unlocked even if the user sends an unlocking instruction through the microswitch on the door, so as to prevent the vehicle from being unlocked by others at will when the user stops the vehicle to wait for someone or have a rest in the vehicle, thereby improving the safety of vehicle unlocking. Therefore, the apparatus can accurately determine whether the terminal is in the safe unlocking area according to the received signal strength indicator values of the plurality of Bluetooth modules, greatly increasing accuracy and safety of vehicle unlocking.

66.According to an embodiment of the present disclosure, the second obtaining module 3 may be further configured to: filter each of the received signal strength indicator values, and calculate an average value of the received signal strength indicator values within a preset time; obtain an absolute value of the average value of the received signal strength indicator values; and obtain a distance between the terminal and the Bluetooth module according to the absolute value, and obtain the distance between the terminal and the vehicle according to the distance between the terminal and the Bluetooth module.

67.Certainly, when the user wants to lock the vehicle, the user may also send a locking instruction by touching the microswitch. If the terminal is in a safe locking range (the distance between the terminal and the vehicle is less than or equal to 3 meters, and the terminal is not in the vehicle), and the vehicle meets the safe unlocking condition, after receiving the vehicle unlocking instruction, the body control module 6 may verify the identity of the terminal according to the established Bluetooth channel. If the verification succeeds, the body control module may send a corresponding CAN message to the door lock actuator of the vehicle, so that the door lock actuator executes the unlocking command according to the CAN message to unlock the vehicle. The safe unlocking condition may include that the vehicle is at an OFF position and is not in an anti-theft state.

68.In the embodiment of the present disclosure, the second obtaining module 3 may obtain the distance between the terminal and the Bluetooth module 1 according to the following equation:

$$D=10\char`^[(\,|\,RSSI\,|\,\text{-}A)/(10n)].$$

69.D is the distance between the terminal and the Bluetooth module, |RSSI| is the absolute value of the average value of the received signal strength indicator values, A is a received signal strength indicator value existing when the terminal is 1 meter away from the Bluetooth module, and n is an attenuation factor of the Bluetooth module. A value of n is affected by a body and a partition and a partition apparatus in the vehicle, and values of n of the Bluetooth modules are also different. A and n of each Bluetooth module may be preset through related experiments.

70.After obtaining the received signal strength indicator value corresponding to each of the Bluetooth modules 1, the second obtaining module 3 performs filtering and smoothing on each of the values to eliminate influence of noise, and calculates the average value of the received signal strength indicator values within the preset time. Then the second obtaining module 3 obtains the absolute value of the average value of the received signal strength indicator values, and obtains the distance between the terminal and the Bluetooth module according to the absolute value. For example, if average values of received signal strength indicator values of three Bluetooth modules are respectively -72, -65, and -83, and absolute values are respectively 72, 65, and 83, the second obtaining module 3 obtains a smallest value of the absolute values, and then calculates a distance between the Bluetooth module and the terminal corresponding to each of the absolute values according to the formula $D=10\char`^[(|RSSI|-A)/(10n)]$, and uses the distance as the distance between the terminal and the vehicle. Alternatively, the second obtaining module 3 may also directly calculate the distance between each of the Bluetooth modules and the terminal according to the formula $D=10\char`^[(|RSSI|-A)/(10n)]$ respectively, and then use a smallest calculated distance as the distance between the terminal and the vehicle. In this way, the distance between the terminal and the vehicle can be accurately calculated, and then it can be accurately determined whether the terminal is in the safe unlocking area.

71.According to an embodiment of the present disclosure, the second obtaining module 3 may be further configured to: obtain a distance between the terminal and each of the Bluetooth modules according to each of the received signal strength indicator values, and obtain the position of the terminal by using a three-point positioning principle according to the distance between the terminal and each of the Bluetooth modules.

72.After the first obtaining module 2 obtains the received signal strength indicator value corresponding to each of the Bluetooth modules, the second obtaining module 3 may calculate the distance between each of the Bluetooth modules and the terminal according to the formula $D=10\char`^[(|RSSI|-A)/(10n)]$. The second obtaining module 3 may use an actual position of each of the Bluetooth modules as a center to draw three circles by using the distance between the Bluetooth module and the terminal as a radius. The three circles with different centers and radii intersect at a specific point, and the point is the position of the terminal. After the second obtaining module 3 determines the position of the terminal, the determining module 4 determines whether the terminal is in the vehicle. If the terminal is in the vehicle, the body control module 6 sends, to the door lock actuator of the vehicle, a corresponding CAN message prohibiting the unlocking of the vehicle, to prohibit the vehicle from being unlocked. In other words, if the terminal is in the vehicle, even if the user mistakenly triggers the terminal to send an unlocking instruction, the vehicle is not unlocked.

73.According to an embodiment of the present disclosure, the determining module 4 is further configured to determine whether the terminal is in the vehicle according to the position of the terminal, where if it is determined that the terminal is in the vehicle, the body control module 6 prohibits the vehicle from being unlocked/locked.

74.After the position of the terminal is determined, the determining module 4 determines whether the terminal is in the vehicle. If the terminal is in the vehicle, the body control module sends, to the door lock actuator of the vehicle, a corresponding CAN message prohibiting the unlocking/locking of the vehicle, to prohibit the vehicle from being unlocked/locked. In other words, if the terminal is in the vehicle, even if the user mistakenly triggers the terminal to send an unlocking/locking instruction, the vehicle is not unlocked/locked.

75.In summary, according to the apparatus for unlocking a vehicle in the embodiment of the present disclosure, the plurality of Bluetooth modules establish a communication connection to the terminal, when the unlocking instruction sent by the user is received, the first obtaining module respectively obtains the received signal strength indicator value corresponding to each of the Bluetooth modules is respectively obtained, the second obtaining module obtains the distance between the terminal and the vehicle and the position of the terminal according to each of the received signal strength indicator values, and the determining module determines, according to the distance between the terminal and the vehicle and the position of the terminal, whether the terminal is in the safe unlocking area and whether the vehicle meets the safe unlocking condition. When it is determined that the terminal is in the safe unlocking area and the vehicle meets the safe unlocking condition, the instruction sending module sends the vehicle unlocking instruction to the body control module of the vehicle, so that the body control module controls, according to the vehicle unlocking instruction, the vehicle to be unlocked. Therefore, according to the apparatus, it can be accurately determined whether the terminal is in the safe unlocking area according to the received signal strength indicator values of the plurality of Bluetooth modules, greatly increasing accuracy and safety of vehicle unlocking.

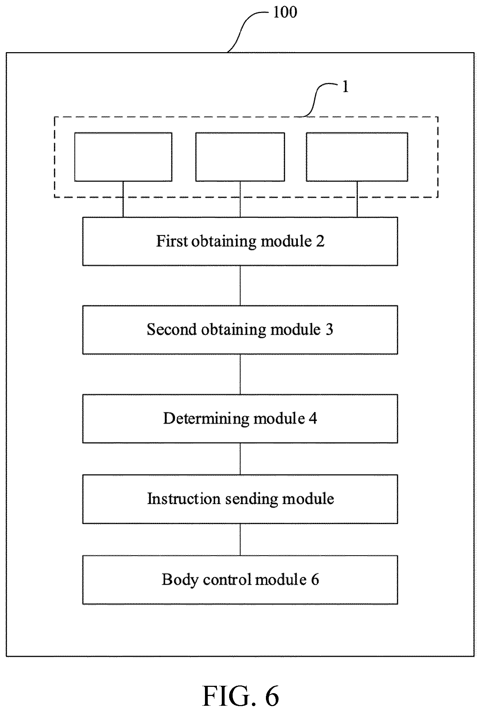

76.In addition, as shown in FIG. 6, an embodiment of the present disclosure further provides a vehicle 100, including the above apparatus for unlocking a vehicle.

77.According to the vehicle of the embodiment of the present disclosure, by using the above apparatus for unlocking a vehicle, it can be accurately determined whether a terminal is in a safe unlocking area according to received signal strength indicator values of a plurality of Bluetooth modules, greatly increasing accuracy and safety of vehicle unlocking.

78.In the description of the present disclosure, it should be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial", "radial", and "circumferential" are based on orientation or position relationships shown in the accompanying drawings, and are used only for ease and brevity of illustration and description, rather than indicating or implying that the mentioned apparatus or component needs to have a particular orientation or needs to be constructed and operated in a particular orientation. Therefore, such terms should not be construed as limiting of the present disclosure.

79.In addition, terms "first" and "second" are used only for a purpose of description, and shall not be construed as indicating or implying relative importance or implying a quantity of indicated technical features. Therefore, a feature restricted by "first" or "second" may explicitly indicate or implicitly include one or more such features. In description of the present disclosure, "multiple" means at least two, such as two and three unless it is specifically defined otherwise.

80.In the present disclosure, unless otherwise explicitly specified or defined, the terms such as "mount", "connect", "connection", and "fixed" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two components or mutual interaction relationship between two components. A person of ordinary skill in the art can understand specific meanings of the terms in the present disclosure based on specific situations.

81.In the present disclosure, unless otherwise explicitly specified or defined, the first feature being located "above" or "below" the second feature may be the first feature being in a direct contact with the second feature, or the first feature being in an indirect contact with the second feature through an intermediary. Moreover, the first feature is "over", "above", and "on" the second feature may mean that the first feature is directly above or obliquely above the second feature, or simply means that the first feature has a higher horizontal height than the second feature. The first feature is "under", "below" and "underneath" the second feature may mean that the first feature is directly below or obliquely below the second feature, or simply means that the first feature has a lower horizontal height than the second feature.

82.In the description of this specification, the description of the reference terms "an embodiment", "some embodiments", "an example", "a specific example", "some examples," and the like means that specific features, structures, materials or characteristics described in combination with the embodiment(s) or example(s) are included in at least one embodiment or example of the present disclosure. In this specification, exemplary representations of the above terms do not necessarily refer to the same embodiment or example. Moreover, the described specific features, structures, materials or characteristics may be combined in a suitable manner in any one or more embodiments or examples. In addition, in a case that is not mutually contradictory, a person skilled in the art can combine or group different embodiments or examples that are described in this specification and features of the different embodiments or examples.

83.Although the embodiments of the present disclosure have been shown and described above, it can be understood that, the foregoing embodiments are exemplary and should not be understood as limitation to the present disclosure. A person of ordinary skill in the art can make changes, modifications, replacements, or variations to the foregoing embodiments within the scope of the present disclosure.

## Claims

1. A method for unlocking a vehicle, wherein the vehicle comprises a plurality of Bluetooth modules configured to establish a communication connection to a terminal, and the method comprises the following steps:

   when an unlocking instruction sent by a user is received, respectively obtaining a received signal strength indicator value corresponding to each of the Bluetooth modules;
   obtaining a distance between the terminal and the vehicle and a position of the terminal according to each of the received signal strength indicator values;
   determining, according to the distance between the terminal and the vehicle and the position of the terminal, whether the terminal is in a safe unlocking area and whether the vehicle meets a safe unlocking condition; and
   if it is determined that the terminal is in the safe unlocking area and the vehicle meets the safe unlocking condition, sending a vehicle unlocking instruction to a body control module of the vehicle, so that the body control module controls, according to the vehicle unlocking instruction, the vehicle to be unlocked.

2. The method for unlocking a vehicle according to claim 1, wherein the plurality of Bluetooth modules comprise first to third Bluetooth modules respectively disposed at a left door, a right door, and a trunk of the vehicle.

3. The method for unlocking a vehicle according to claim 1 or 2, wherein the obtaining a distance between the terminal and the vehicle according to the received signal strength indicator value comprises:

   filtering each of the received signal strength indicator values, and calculating an average value of the received signal strength indicator values within a preset time;
   obtaining an absolute value of the average value of the received signal strength indicator values; and
   obtaining a distance between the terminal and the Bluetooth module according to the absolute value, and obtaining the distance between the terminal and the vehicle according to the distance between the terminal and the Bluetooth module.

4. The method for unlocking a vehicle according to any of claims 1 to 3, wherein the obtaining a position of the terminal according to each of the received signal strength indicator values comprises:

   obtaining a distance between the terminal and each of the Bluetooth modules according to each of the received signal strength indicator values; and
   obtaining the position of the terminal by using a three-point positioning principle according to the distance between the terminal and each of the Bluetooth modules.

5. The method for unlocking a vehicle according to claim 3 or 4, wherein the distance between the terminal and the Bluetooth module is obtained according to the following equation:

$$D=10^{\wedge}[(|RSSI|-A)/(10n)],$$

wherein
D is the distance between the terminal and the Bluetooth module, |RSSI| is the absolute value of the average value of the received signal strength indicator values, A is a received signal strength indicator value existing when the terminal is 1 meter away from the Bluetooth module, and n is an attenuation factor of the Bluetooth module.

6. The method for unlocking a vehicle according to any of claims 1 to 5, further comprising:

determining whether the terminal is in the vehicle according to the position of the terminal; and if it is determined that the terminal is in the vehicle, prohibiting, by the body control module, the vehicle from being unlocked/locked.

7. The method for unlocking a vehicle according to any of claims 1 to 6, wherein the determining whether the terminal is in a safe unlocking area according to the distance between the terminal and the vehicle and the position of the terminal comprises:

determining whether the distance between the terminal and the vehicle is less than or equal to a safe unlocking distance and determining whether the terminal is in the vehicle; and if the distance between the terminal and the vehicle is less than or equal to the safe unlocking distance and the terminal is not in the vehicle, determining that the terminal is in the safe unlocking area.

8. An apparatus for unlocking a vehicle, comprising:

a plurality of Bluetooth modules configured to establish a communication connection to a terminal; a first obtaining module configured to: when an unlocking instruction sent by a user is received, respectively obtain a received signal strength indicator value corresponding to each of the Bluetooth modules; a second obtaining module configured to obtain a distance between the terminal and the vehicle and a position of the terminal according to each of the received signal strength indicator values; a determining module configured to determine according to the distance between the terminal and the vehicle and the position of the terminal, whether the terminal is in a safe unlocking area and whether the vehicle meets a safe unlocking condition; and an instruction sending module configured to: when it is determined that the terminal is in the safe unlocking area and the vehicle meets the safe unlocking condition, send a vehicle unlocking instruction to a body control module of the vehicle, so that the body control module controls, according to the vehicle unlocking instruction, the vehicle to be unlocked.

9. The apparatus for unlocking a vehicle according to claim 8, wherein the plurality of Bluetooth modules comprise first to third Bluetooth modules respectively disposed at a left door, a right door, and a trunk of the vehicle.

10. The apparatus for unlocking a vehicle according to claim 8 or 9, wherein the second obtaining module is further configured to:

filter each of the received signal strength indicator values, and calculate an average value of the received signal strength indicator values within a preset time; obtain an absolute value of the average value of the received signal strength indicator values; and obtain a distance between the terminal and the Bluetooth module according to the absolute value, and obtain the distance between the terminal and the vehicle according to the distance between the terminal and the Bluetooth module.

11. The apparatus for unlocking a vehicle according to any of claims 8 to 10, wherein the second obtaining module is further configured to:

obtain a distance between the terminal and each of the Bluetooth modules according to each of the received signal strength indicator values; and obtain the position of the terminal by using a three-point positioning principle according to the distance between the terminal and each of the Bluetooth modules.

12. The apparatus for unlocking a vehicle according to claim 10 or 11, wherein the second obtaining module obtains the distance between the terminal and the Bluetooth module according to the following equation:

$$D=10^{\wedge}[(|RSSI|-A)/(10n)],$$

wherein
D is the distance between the terminal and the Bluetooth module, |RSSI| is the absolute value of the average value of the received signal strength indicator values, A is a received signal strength indicator value existing when the terminal is 1 meter away from the Bluetooth module, and n is an attenuation factor of the Bluetooth module.

13. The apparatus for unlocking a vehicle according to any of claims 8 to 12, wherein the determining module is further configured to determine whether the terminal is in the vehicle according to the position of the terminal, wherein if it is determined that the terminal is in the vehicle, the body control module prohibits the vehicle from being unlocked/locked.

14. The apparatus for unlocking a vehicle according to any of claims 8 to 13, wherein the determining module is further configured to: determine whether the distance between the terminal and the vehicle is less than or equal to a safe unlocking distance and determine whether the terminal is in the vehicle, and if the distance between the terminal and the vehicle is less than or equal to the safe unlocking distance and the terminal is not in the vehicle, determine that the terminal is in the safe unlocking area.

15. A vehicle, comprising: the apparatus for unlocking a vehicle according to any of claims 8 to 14.

| When an unlocking instruction sent by a user is received, respectively obtain a received signal strength indicator value corresponding to each Bluetooth module | S1 |

| Obtain a distance between a terminal and a vehicle and a position of the terminal according to each of the received signal strength indicator values | S2 |

| Determine, according to the distance between the terminal and the vehicle, whether the terminal is in a safe unlocking area and whether the vehicle meets a safe unlocking condition | S3 |

| If it is determined that the terminal is in the safe unlocking area and the vehicle meets the safe unlocking condition, send a vehicle unlocking instruction to a body control module of the vehicle, so that the body control module controls, according to the vehicle unlocking instruction, the vehicle to be unlocked | S4 |

FIG. 1

FIG. 2

| | |
|---|---|
| Filter each received signal strength indicator value, and calculate an average value of the received signal strength indicator values within a preset time | S201 |
| Obtain an absolute value of the average value of the received signal strength indicator values | S202 |
| Obtain a distance between a terminal and a Bluetooth module according to the absolute value, and obtain a distance between the terminal and a vehicle according to the distance between the terminal and the Bluetooth module | S203 |

FIG. 3

Obtain a distance between a terminal and each Bluetooth module according to each received signal strength indicator value ⟋ S5

Obtain a position of the terminal by using a three-point positioning principle according to the distance between the terminal and each Bluetooth module ⟋ S6

# FIG. 4

⟋ 1

First obtaining module 2

Second obtaining module 3

Determining module 4

Instruction sending module

Body control module 6

# FIG. 5

100

1

First obtaining module 2

Second obtaining module 3

Determining module 4

Instruction sending module

Body control module 6

FIG. 6

## INTERNATIONAL SEARCH REPORT

| International application No. |
| --- |
| **PCT/CN2019/083262** |

### A. CLASSIFICATION OF SUBJECT MATTER

G01S 11/06(2006.01)i

According to International Patent Classification (IPC) or to both national classification and IPC

### B. FIELDS SEARCHED

Minimum documentation searched (classification system followed by classification symbols)

G01S; B60R; H04L

Documentation searched other than minimum documentation to the extent that such documents are included in the fields searched

Electronic data base consulted during the international search (name of data base and, where practicable, search terms used)

CNABS, CNKI, DWPI, VEN, SIPOABS: 车辆, 蓝牙, 解锁, 距离, 位置, 检测; Vehicle, Bluetooth, distance, position, detect

### C. DOCUMENTS CONSIDERED TO BE RELEVANT

| Category* | Citation of document, with indication, where appropriate, of the relevant passages | Relevant to claim No. |
| --- | --- | --- |
| X | CN 107741583 A (SHANGHAI KOSTAL-HUAYANG AUTOMOTIVE ELECTRIC CO., LTD.) 27 February 2018 (2018-02-27)<br>    description, pp. 4-7, and figures 1-7 | 1-15 |
| A | CN 106603664 A (CONTINENTAL AUTOMOTIVE HOLDING CO., LTD.) 26 April 2017 (2017-04-26)<br>    entire document | 1-15 |
| A | CN 107580044 A (BEIJING ELECTRIC VEHICLE CO., LTD.) 12 January 2018 (2018-01-12)<br>    entire document | 1-15 |
| A | CN 106218582 A (LAUNCH TECH CO., LTD.) 14 December 2016 (2016-12-14)<br>    entire document | 1-15 |
| A | DE 102016118967 A1 (VALEO SCHALTER & SENSOREN GMBH) 12 April 2018 (2018-04-12)<br>    entire document | 1-15 |
| A | JP 2018005559 A (SOKEN INC ET AL.) 11 January 2018 (2018-01-11)<br>    entire document | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 June 2019** | **28 June 2019** |

| Name and mailing address of the ISA/CN | Authorized officer |
| --- | --- |
| **State Intellectual Property Office of the P. R. China (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/083262**

| Patent document cited in search report | | | Publication date (day/month/year) | Patent family member(s) | | | Publication date (day/month/year) |
|---|---|---|---|---|---|---|---|
| CN | 107741583 | A | 27 February 2018 | None | | | |
| CN | 106603664 | A | 26 April 2017 | None | | | |
| CN | 107580044 | A | 12 January 2018 | None | | | |
| CN | 106218582 | A | 14 December 2016 | WO | 2018028145 | A1 | 15 February 2018 |
| DE | 102016118967 | A1 | 12 April 2018 | None | | | |
| JP | 2018005559 | A | 11 January 2018 | None | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810362539X